(19) Europäisches Patentamt
European Patent Office
Office européen des brevets

(11) EP 1 510 569 A1

(12) **EUROPEAN PATENT APPLICATION**
published in accordance with Art. 158(3) EPC

(43) Date of publication:
**02.03.2005 Bulletin 2005/09**

(21) Application number: **03755287.4**

(22) Date of filing: **28.05.2003**

(51) Int Cl.[7]: **C10M 169/06**, F16C 33/66

(86) International application number:
**PCT/JP2003/006703**

(87) International publication number:
**WO 2003/099973 (04.12.2003 Gazette 2003/49)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **29.05.2002 JP 2002156339**

(71) Applicants:
- **Nippon Oil Corporation**
  **Tokyo 105-8412 (JP)**
- **NSK LTD.,**
  **Shinagawa-ku, Tokyo 141-8560 (JP)**

(72) Inventors:
- **ISO, Kenichi**
  **Fujisawa-shi, Kanagawa 251-8501 (JP)**
- **NAKA, Michiharu**
  **Fujisawa-shi, Kanagawa 251-8501 (JP)**
- **SAKAMOTO, Kiyomi**
  **Yokohama-shi, Kanagawa 231-0815 (JP)**
- **KINOSHITA, Hirotsugu**
  **Minato-ku, Tokyo 105-8412 (JP)**

(74) Representative: **Schuster, Thomas, Dipl.-Phys.**
**Grünecker, Kinkeldey, Stockmair & Schwanhäusser**
**Anwaltssozietät**
**Maximilianstrasse 58**
**80538 München (DE)**

(54) **GREASE COMPOSITION AND ROLLING BEARING**

(57) A grease composition comprising a lubricating base oil, at least one diurea compound represented by one of the general formulas (1) to (3) below, a naphthenic acid salt, and succinic acid or a derivative thereof, wherein each of the proportions of the diurea compounds represented by general formulas (1) to (3) satisfies the conditions represented by inequalities (4) and (5) below, and each of the proportions of the naphthenic acid salt and the succinic acid or its derivative is 0.1-10 % by mass based on the total amount of the grease composition.

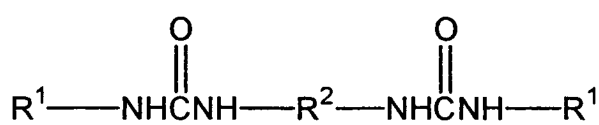
(1)

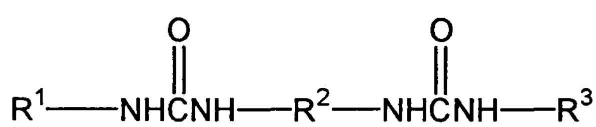
(2)

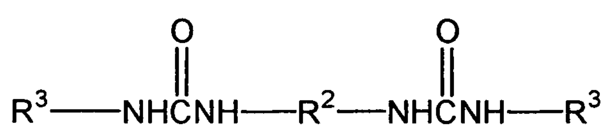
(3)

[wherein $R^1$ represents a C7-12 aromatic ring-containing hydrocarbon group, $R^2$ represents a C6-15 divalent hydro-

EP 1 510 569 A1

carbon group, and $R^3$ represents a cyclohexyl group or a C7-12 alkylcyclohexyl group]

$$5 \leq W_1 + W_2 + W_3 \leq 35 \quad (4)$$

$$0 \leq (W_1 + 0.5 \times W_2)/(W_1 + W_2 + W_3) \leq 0.55 \quad (5)$$

[wherein $W_1$, $W_2$ and $W_3$ represent the proportions of diurea compounds represented by general formulas (1) to (3), respectively, based on the total amount of the grease composition (% by mass)].

## Description

### Technical Field

The present invention relates to a grease composition and a bearing, and especially to a grease composition with excellent flaking life and excellent seizure life at high temperatures, which can be suitably used under high-temperature, high-speed and high-load conditions such as for automotive electrical equipments and other engine accessories, alternators, idler pulleys and electromagnetic clutches for automotive air conditioners, as well as to a rolling bearing which encloses the grease composition.

### Background Art

Rotating parts of powered units in automotive engines, including, for example, automotive electrical equipments and engine accessories such as alternators, electromagnetic clutches for automotive air conditioners, idler pulleys and the like, generally employ rolling bearings, and grease is the primary material used for their lubrication.

As FRONT WHEEL DRIVE cars come into wider use in order to meet the aim of achieving smaller, lighter weight vehicles, and demands increase for even larger riding spaces, automobiles are inevitably undergoing reduction in engine room space and thus requiring even smaller and lighter weight solutions for the aforementioned electrical parts and engine accessories. At the same time, demands are increasing for higher performance and greater output by such parts. However, reduction in output with smaller size is unavoidable, and for example, increasing speed of alternators or electromagnetic clutches for automotive air conditioners is accompanied by a reduction in output, which results in commensurate increase in idler pulley speed as well. Since demands for improved silence have accelerated densification of engine rooms and increased temperatures in engine rooms, one of the properties required for such parts is greater resistance against high temperature.

Such increase in speed and performance has led to notable problems such as flaking occurring with white compositional changes due to hydrogen embrittlement in bearings of these and other parts, and prevention of this has become a new important issue. Such parts also include parts used in high temperature ranges (for example, 170-180°C), and therefore seizure resistance at high temperature is another important required aspect of performance. The grease used in the bearings must also be grease with more excellent rust preventive performance than grease used at other locations.

In light of this background, various additive prescriptions have been proposed to improve the properties of grease. For example, Japanese Unexamined Patent Publication HEI No. 3-210394 discloses grease to which there are added an oil-soluble organic inhibitor (sulfonic acid metal salt, etc.), a water-soluble inorganic passivation agent (sodium nitrite, etc.) and a non-ionic surfactant, the additive prescription being intended to improve the rust preventive performance. Also, Japanese Unexamined Patent Publication HEI No. 9-3466 discloses a grease composition using a diurea compound as a thickener.

### Disclosure of the Invention

Even when the grease compositions described in these publications are used, however, it is very difficult to achieve a sufficient flaking life and seizure life under the harsh conditions of high temperature, high speed and high load. For example, even when using a sulfonic acid salt as a rust inhibitor as in the grease composition disclosed in Japanese Unexamined Patent Publication HEI No. 3-210394, it is not always easy to achieve sufficient flaking life while maintaining rust preventive performance. Also, although a relatively satisfactory seizure resistance property is achieved under high-speed conditions with the grease composition disclosed in Japanese Unexamined Patent Publication HEI No. 9-3466, no grease has yet been obtained which can maintain the seizure resistance property up to a high temperature range (for example, 160°C or above).

It is an object of the present invention, which has been accomplished in light of the problems of the prior art described above, to provide a grease composition which can exhibit a sufficient flaking life and seizure life even when used under high-temperature, high-speed and high-load conditions, as well as a bearing which encloses the grease composition.

In order to solve the problems referred to above, the grease composition of the invention is characterized by comprising a lubricating base oil, at least one diurea compound represented by one of the following general formulas (1) to (3), a naphthenic acid salt, and succinic acid or a derivative thereof, wherein each of the proportions of the diurea compounds represented by general formulas (1) to (3) satisfies the conditions represented by inequalities (4) and (5) below, and each of the proportions of the naphthenic acid salt and the succinic acid or its derivative is 0.1-10 % by mass based on the total amount of the grease composition.

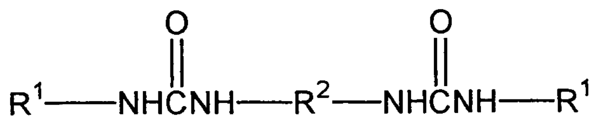

(1)

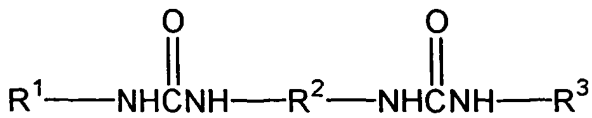

(2)

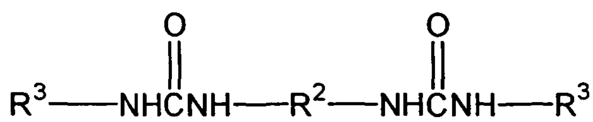

(3)

[wherein $R^1$ represents a C7-12 aromatic ring-containing hydrocarbon group, $R^2$ represents a C6-15 divalent hydrocarbon group, and $R^3$ represents a cyclohexyl group or a C7-12 alkylcyclohexyl group]

$$5 \leq W_1 + W_2 + W_3 \leq 35 \qquad (4)$$

$$0 \leq (W_1 + 0.5 \times W_2)/(W_1 + W_2 + W_3) \leq 0.55 \qquad (5)$$

[wherein $W_1$, $W_2$ and $W_3$ represent the proportions of diurea compounds represented by general formulas (1) to (3), respectively, based on the total amount of the grease composition (% by mass)].

The grease composition of the invention preferably further comprises at least one type of organic metal salt represented by the following general formulas (6) to (11) at 0.1-10 % by mass based on the total amount of the grease composition.

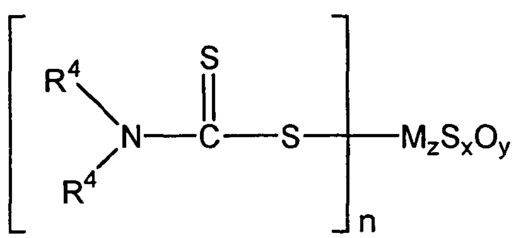

(6)

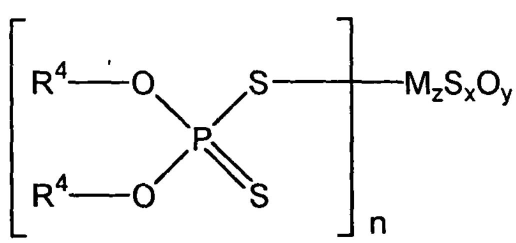

(7)

[wherein $R^4$ represents a C1-18 hydrocarbon group, M represents a metal atom, n represents an integer of 2-4, x and

y each represent an integer of 0-4, and z represents an integer of 1-4].

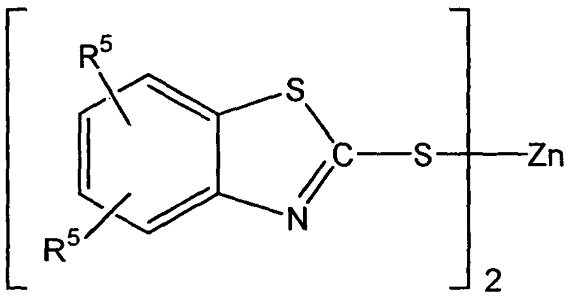
(8)

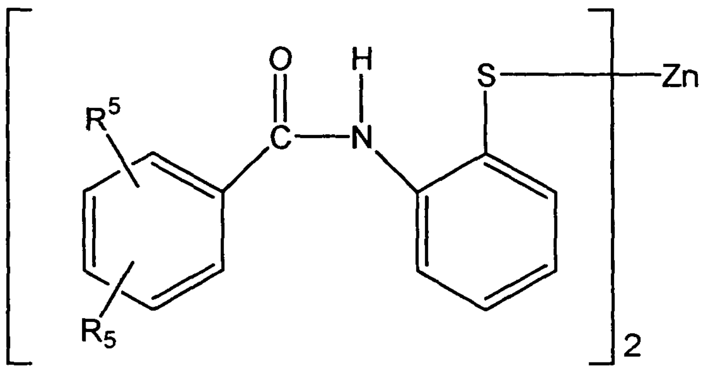
(9)

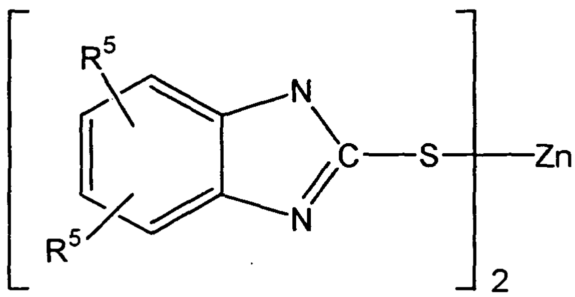
(10)

[wherein $R^5$ represents a hydrogen atom or a C1-18 hydrocarbon group].

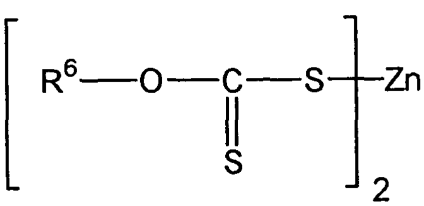
(11)

[wherein $R^6$ represents a C1-18 hydrocarbon group].

The grease composition of the invention also preferably comprises no sulfonic acid salt.

The rolling bearing of the invention holds a plurality of rolling elements in a freely rotatable manner at roughly equal spacings between an inner ring and an outer ring via a bearing cage, and it is characterized in that the grease composition of the invention is enclosed in the bearing space formed by the inner ring, outer ring and rolling elements.

## Brief Description of the Drawings

Fig. 1 is a schematic cross-sectional view of a preferred embodiment of a rolling bearing according to the invention.

Fig. 2 is a graph showing the correlation between $(W_1 + 0.5 \times W_2)/(W_1 + W_2 + W_3)$ and seizure life obtained in the examples.

Fig. 3 is a graph showing the correlation between the amount of zinc naphthenate added and the incidence of flaking and grade of rust, obtained in the examples.

Fig. 4 is a graph showing the correlation between the amount of succinic acid ester added and the incidence of flaking and grade of rust, obtained in the examples.

Fig. 5 is a graph showing the correlation between the amount of ZnDTC added and the incidence of flaking and seizure life, obtained in the examples.

## Best Mode for Carrying Out the Invention

Preferred embodiments of the present invention will now be explained in detail.

[Lubricating base oil]

The lubricating base oil used for the invention is not particularly restricted, and may be any one ordinarily used as a lubricating base oil. In order to avoid noise generation during low temperature operation due to a lack of low temperature fluidity, or seizure due to a lack of oil film formation at high temperature, it is preferably a base oil having a 40°C dynamic viscosity of preferably 10-400 $mm^2$/sec, more preferably 20-250 $mm^2$/sec and even more preferably 40-150 $mm^2$/sec.

As specific examples of lubricating base oils there may be mentioned mineral oil-based, synthetic oil-based or natural oil-based lubricating oils. As mineral oil-based lubricating oils there may be used mineral oils purified by appropriate combinations of distillation under reduced pressure, oil deasphalting, solvent extraction, hydrogenating decomposition, solvent dewaxing, sulfuric acid washing, clay refining, hydrogenation refining and the like. As synthetic oil-based lubricating base oils there may be mentioned hydrocarbon-based oils, aromatic-based oils, ester-based oils and ether-based oils. As hydrocarbon-based oils there may be mentioned poly-α-olefins such as normal paraffin, isoparaffin, polybutene, polyisobutylene, 1-decene oligomers and 1-decene and ethylene co-oligomers, or their hydrogenated forms. As aromatic-based oils there may be mentioned alkylbenzenes such as monoalkylbenzenes and dialkylbenzenes, or alkylnaphthalenes such as monoalkylnaphthalenes, dialkylnaphthalenes and polyalkylnaphthalenes. As ester-based oils there may be mentioned diester oils such as dibutyl sebacate, di-2-ethylhexyl sebacate, dioctyl adipate, diisodecyl adipate, ditridecyl adipate, ditridecyl glutarate and methyl acetylcinnolate, aromatic ester oils such as trioctyl trimellitate, tridecyl trimellitate and tetraoctyl pyromellitate, polyol ester oils such as trimethylolpropane caprylate, trimethylolpropane pelargonate, pentaerythritol-2-ethylhexanoate and pentaerythritol pelargonate, and complex ester oils which are oligoesters of polyhydric alcohols and fatty acid mixtures of dibasic acids or monobasic acids. As ether-based oils there may be mentioned polyglycols such as polyethylene glycol, polypropylene glycol, polyethylene glycol monoether and polypropylene glycol monoether, phenyl ether oils such as monoalkyltriphenyl ether, alkyldiphenyl ether, dialkyldiphenyl ether, pentaphenyl ether, tetraphenyl ether, monoalkyltetraphenyl ether and dialkyltetraphenyl ether. As other synthetic lubricating base oils there may be mentioned tricresyl phosphate, silicone oil and perfluoroalkyl ethers. As natural oil-based lubricating oils there may be mentioned fat and oil-based oils such as beef tallow, lard, soybean oil, rapeseed oil, rice bran oil, coconut oil, palm oil and palm kernel oil, or their hydrogenated forms. These base oils may be used alone, or in mixtures of two or more.

[Diurea compound]

According to the invention, a diurea compound represented by any of the following formulas (1) to (3) is added to the lubricating base oil as a thickener.

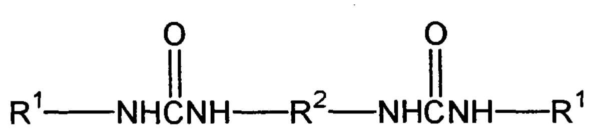

(1)

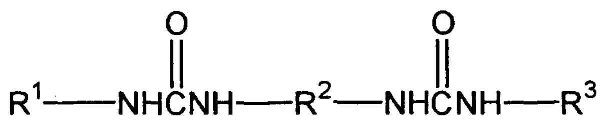

(2)

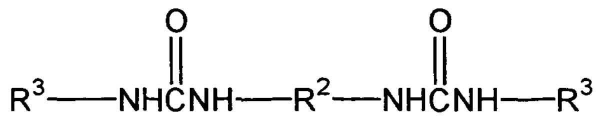

(3)

In general formulas (1) and (2), $R^1$ represents a C7-12 aromatic ring-containing hydrocarbon group. As such aromatic ring-containing hydrocarbons there may be mentioned specifically toluyl, xylyl, β-phenacyl, t-butylphenyl, dodecylphenyl, benzyl, methylbenzyl and the like.

In general formulas (1) to (3), $R^2$ represents a C6-15 divalent hydrocarbon group. As such hydrocarbon groups there may be mentioned straight-chain or branched alkylene groups, straight-chain or branched alkenylene groups, cycloalkylene groups, aromatic groups and the like.

In general formulas (2) and (3), $R^3$ represents a cyclohexyl group or a C7-12 alkylcyclohexyl group. Specifically, there may be mentioned methylcyclohexyl, dimethylcyclohexyl, ethylcyclohexyl, diethylcyclohexyl, propylcyclohexyl, isopropylcyclohexyl, 1-methyl-3-propylcyclohexyl, butylcyclohexyl, pentylcyclohexyl, pentylmethylcyclohexyl and hexylcyclohexyl.

The proportion of each diurea compound represented by general formula (1) to (3) must satisfy the conditions represented by inequalities (4) and (5) below.

$$5 \leq W_1 + W_2 + W_3 \leq 35 \quad (4)$$

$$0 \leq (W_1 + 0.5 \times W_2)/(W_1 + W_2 + W_3) \leq 0.55 \quad (5)$$

[wherein $W_1$, $W_2$ and $W_3$ represent the proportions of diurea compounds represented by general formulas (1) to (3), respectively, based on the total amount of the grease composition (all units are weight percentages)].

As shown by inequality (4), the total $W_1 + W_2 + W_3$ of the proportions of the diurea compounds represented by general formulas (1) to (3) is 5-35 % by mass based on the total amount of the grease composition. If $W_1 + W_2 + W_3$ is less than 5 % by mass, the effect as a thickener will be minimal, either preventing a sufficient grease state or resulting in more leaking of grease from the bearing. For the same reason, $W_1 + W_2 + W_3$ is preferably 10 % by mass or greater, and more preferably 13 % by mass or greater. If $W_1 + W_2 + W_3$ exceeds 35 % by mass, the hardness of grease will be surpassed, thereby preventing an adequate lubricating function, while for the same reason, $W_1 + W_2 + W_3$ is preferably no greater than 30 % by mass and more preferably no greater than 25 % by mass.

Also, if $(W_1 + 0.5 \times W_2)/(W_1 + W_2 + W_3)$ in inequality (5) exceeds 0.55, the seizure life at high temperature will be shortened. For the same reason, $(W_1 + 0.5 \times W_2)/(W_1 + W_2 + W_3)$ is preferably no greater than 0.4 and more preferably no greater than 0.3. For the same reason, $(W_1 + 0.5 \times W_2)/(W_1 + W_2 + W_3)$ is preferably at least 0.1 and more preferably at least 0.2.

[Additives]

The grease composition of the invention comprises both a naphthenic acid salt as described below and succinic acid or a derivative thereof. The grease composition of the invention may also contain a sulfonic acid salt, but preferably does not since this will allow hydrogen embrittlement and flaking to be more effectively prevented.

(Naphthenic acid salt)

The naphthenic acid salt used for the invention is not particularly restricted so long as it is a carboxylic acid salt with a naphthene center, and although the carboxylic acid thereof may be saturated or unsaturated, it is preferably a saturated carboxylic acid salt with a naphthene center. As specific examples of such naphthenic acid salts there may be mentioned saturated monocyclic carboxylic acid salts ($C_nH_{2n-1}COOM$), saturated heterocyclic carboxylic acid salts

($C_nH_{2n-3}COOM$) and derivatives thereof. For example, compounds represented by the following formulas (12) and (13) are preferably used as monocyclic carboxylic acid salts.

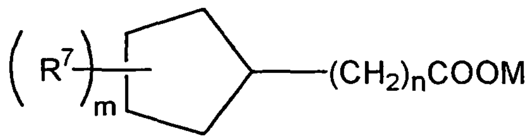

(12)

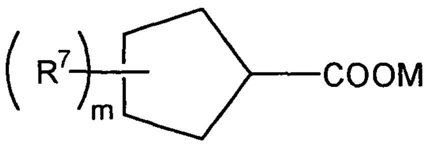

(13)

In formulas (12) and (13), R represents a hydrocarbon group. As such hydrocarbon groups there may be mentioned alkyl, alkenyl, aryl, alkaryl and aralkyl. M represents a metal element, and specifically there may be mentioned Co, Mn, Zn, Al, Ca, Ba, Li, Mg, Cu and Ni. These naphthenic acid salts may be used alone or in appropriate combinations of two or more.

(Succinic acid or derivative thereof)

As succinic acids or derivatives thereof according to the invention there may be mentioned succinic acid, alkylsuccinic acids, alkylsuccinic acid half esters, alkenylsuccinic acids, alkenylsuccinic acid half esters and succinimides. These succinic acids or their derivatives may be used alone or in appropriate combinations of two or more.
The proportion of the naphthenic acid salt and succinic acid or its derivative is 0.1-10 % by mass of each based on the total amount of the grease composition. If the amount of addition of each is less than 0.1 % by mass, a sufficient rust preventing effect will not be exhibited. If the amount of addition is greater than 10 % by mass, the grease will soften to the point of potentially causing grease leakage. The amount of addition of each is preferably within the range of 0.25-5 % by mass based on the total amount of the grease composition, in order to further increase the rust preventive performance and more reliably prevent seizure due to grease leakage.

(Organic metal salt)

In order to improve the flaking life and the seizure life at high temperature, it is preferred to further include at least one of the organic metal salts represented by the following formulas (6) to (11).
The organic metal salts represented by general formula (6) are dialkyldithiocarbamic acid (DTC)-based compounds, and the organic metal salts represented by general formula (7) are dialkyldithiophosphoric acid (DTP)-based compounds.

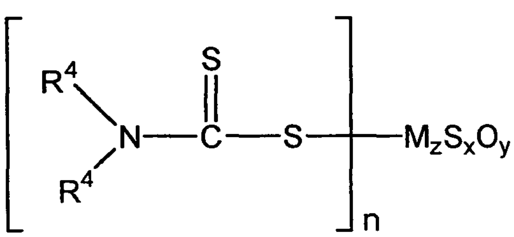

(6)

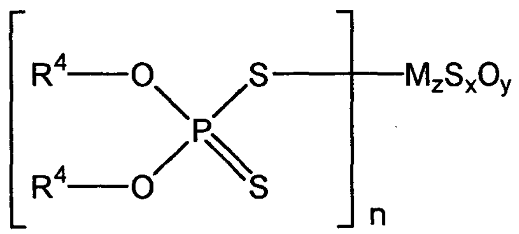

(7)

In these formulas, M represents a metal atom, and specifically there may be mentioned Sb, Bi, Sn, Ni, Te, Se, Fe, Cu, Mo, Zn and the like. $R^4$ represents a C1-18 hydrocarbon group, and each $R^4$ in the same molecule may be identical or different. As hydrocarbon groups represented by $R^4$ there may be mentioned alkyl, cycloalkyl, alkenyl, aryl, alkylaryl and arylalkyl, among which 1,1,3,3-tetramethylbutyl, 1,1,3,3-tetramethylhexyl, 1,1,3-trimethylhexyl, 1,3-dimethylbutyl, 1-methylundecane, 1-methylhexyl, 1-methylpentyl, 2-ethylbutyl, 2-ethylhexyl, 2-methylcyclohexyl, 3-heptyl, 4-methylcyclohexyl, n-butyl, isobutyl, isopropyl, isoheptyl, isopentyl, undecyl, eicosyl, ethyl, octadecyl, octyl, cyclooctyl, cyclododecyl, cyclopentyl, dimethylcyclohexyl, decyl, tetradecyl, docosyl, dodecyl, tridecyl, trimethylcyclohexyl, nonyl, propyl, hexadecyl, hexyl, henicosyl, heptadecyl, heptyl, pentadecyl, pentyl, methyl, tert-butylcyclohexyl, tert-butyl, 2-hexenyl, 2-methallyl, allyl, undecenyl, oleyl, decenyl, vinyl, butenyl, hexenyl, heptadecenyl, tolyl, ethylphenyl, isopropylphenyl, tert-butylphenyl, sec-pentylphenyl, n-hexylphenyl, tert-octylphenyl, isononylphenyl, n-dodecylphenyl, phenyl, benzyl, 1-phenylmethyl, 2-phenylethyl, 3-phenylpropyl, 1,1-dimethylbenzyl, 2-phenylisopropyl, 3-phenylhexyl, benzhydryl and biphenyl are preferred. These groups may also contain ether bonds.

Organic metal salts represented by general formulas (8) to (10) are organic zinc compounds.

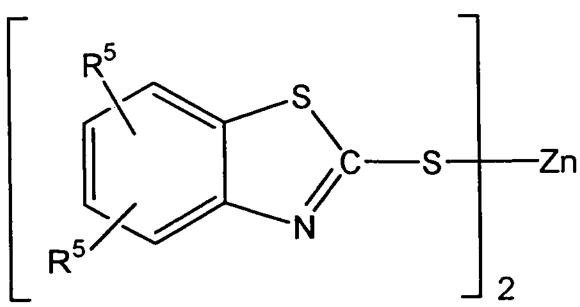

(8)

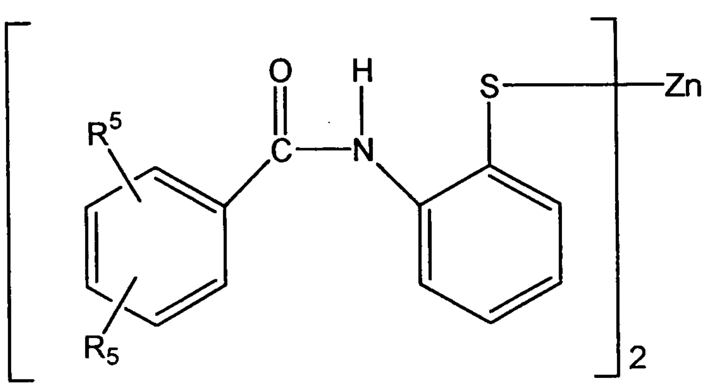

(9)

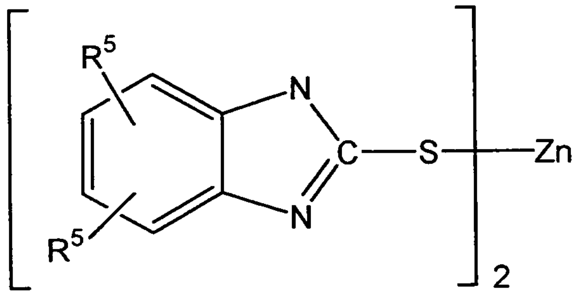

(10)

In these formulas, $R^5$ represents a hydrogen atom or a C1-18 hydrocarbon group. Each $R^5$ in the same molecule may be identical or different.

Among the organic zinc compounds shown above there are preferred methylcaptobenzothiazole zinc, wherein both $R^5$ groups in formula (8) are hydrogen atoms, benzoamidothiophenol zinc wherein both $R^5$ groups in formula (9) are hydrogen atoms, and mercaptobenzoimidazole zinc wherein both $R^5$ groups in formula (10) are hydrogen atoms.

Organic metal salts represented by general formula (11) are zinc alkylxanthogenates.

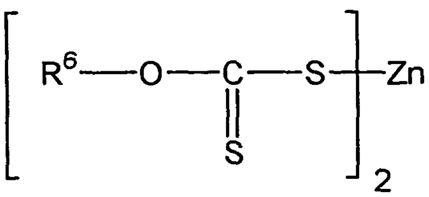

(11)

In this formula, $R^6$ represents a C1-18 hydrocarbon group.

The organic metal salts represented by general formulas (6) to (11) above may each be used alone, or they may be used in combinations of two or more.

The proportions of these organic metal salts are preferably 0.1-10 % by mass, and more preferably 0.5-10 % by mass. If the proportions are less than 0.1 % by mass, it may not be possible to obtain an improved effect for adequate flaking life and seizure life at high temperature. On the other hand, if the proportions are greater than 10 % by mass, the organic metal salts and bearing material may react and the relatively expensive organic metal salts will tend to increase costs, while the seizure life at high temperature may also be shortened.

In order to further enhance the performance of the grease composition of the invention, publicly known additives may also be added as necessary. Examples of such additives include gelling agents such as metal soaps, bentone, silica gel and the like, amine-based, phenol-based and sulfur-based antioxidants, chlorine-based and sulfur-based extreme-pressure agents, oil agents such as fatty acids and animal/vegetable oils, rust inhibitors such as sorbitan esters, metal inactivators such as benzotriazole and sodium nitrite, and viscosity index improvers such as polymethacrylate, polyisobutylene and polystyrene, of which any one or combination of two or more may be used. Here, the proportion of these additives is not particularly restricted so long as the object of the invention can be achieved, but the total content thereof is preferably no greater than 20 % by mass based on the total amount of the grease composition.

[Preparation method]

The grease composition of the invention may be prepared by a method of uniformly mixing diurea compounds represented by general formulas (1) to (3), a naphthenic acid salt and succinic acid or a derivative thereof, as well as an organic metal salt if necessary, with a lubricating base oil. A grease composition of the invention may also be obtained by a method wherein a mixture of diurea compounds represented by general formulas (1) to (3) is prepared by reaction in a single step, the lubricating base oil is used as the solvent and the naphthenic acid salt and succinic acid or derivative thereof are added to the mixture after the reaction.

[Rolling bearing]

The rolling bearing of the invention holds a plurality of rolling elements in a freely rotatable manner at roughly equal spacings between an inner ring and an outer ring via a bearing cage, and it is characterized in that the grease composition of the invention is enclosed in the bearing space formed by the inner ring, outer ring and rolling elements.

Fig. 1 is a schematic cross-sectional view of a ball bearing according to an embodiment of a rolling bearing of the invention, with the ball bearing 1 cut on the plane which includes the rotation axis.

In the ball bearing 1 shown in Fig. 1, a plurality of balls 13 as rolling elements are held at roughly equal spacings in the space between an inner ring 10 and outer ring 11 via a bearing cage 12, and the grease composition of the invention is filled into the bearing space (grease enclosed section S) formed by the inner ring 10, outer ring 11, bearing cage 12 and balls 13. A ring-shaped seal 14 is situated covering the exposed side on both ends of the grease enclosed section S, and the lip 15 formed at the end of the inner diameter side of the seal 14 is connected with the inner ring 10, to seal the grease enclosed section S and prevent leakage of grease and contamination of moisture or foreign matter into the grease enclosed section S from the outside.

According to this embodiment, the grease composition of the invention is enclosed in the grease enclosed section S, thereby allowing sufficient flaking life and seizure life at high-temperature even when used under conditions of high temperature, high speed and high load. Thus, it can be suitably used under high-temperature, high-speed, high-load conditions such as for automotive electrical equipments and other engine accessories, alternators, idler pulleys and electromagnetic clutches for automotive air conditioners.

The rolling bearing of the invention is not particularly restricted to the embodiment described above. For example, although Fig. 1 shows a ball bearing, the rolling bearing of the invention may instead be a roller bearing such as a cylindrical roller bearing, tapered roller bearing or needle roller bearing.

[Examples]

The present invention will now be explained in greater detail through examples and comparative examples, with the understanding that these examples are in no way limitative on the invention.

<u>Examples 1-28, Comparative Examples 1-8</u>

Grease compositions of Examples 1-28 and Comparative Examples 1-8 were prepared having the compositions shown in Tables 1-6 by the following procedure.

Specifically, a lubricating base oil mixed with methane diisocyanate and a lubricating base oil mixed with an amine were combined with the methane diisocyanate and amine in a prescribed molar ratio and with a prescribed total volume, and the mixture was heated and stirred for reaction. Each of the additives pre-dissolved in lubricating oil were added to the obtained semi-solid, and the mixture was passed through a stirrer and roll mill to obtain a grease composition. The components used were as follows.

<u>Base oil</u>

PAO: Hydrogenated poly-$\alpha$-olefin (40°C dynamic viscosity: 47 $mm^2/s$)
Ether: Dialkyl diphenylether (40°C dynamic viscosity: 100 $mm^2/s$)
Ester: Pentaerythritol tetraester (40°C dynamic viscosity: 33 $mm^2/s$)

<u>Additive</u>

Zinc naphthenate (Zn content: 10%)
Succinic acid ester: Alkenylsuccinic acid half ester (Total acid value: 155 mgKOH/g)
ZnDTC: Zinc dialkyldithiocarbamate
ZnDTP: Zinc dialkyldithiophosphate
NiDTC: Nickel dialkyldithiophosphate
Barium sulfonate (total acid value: 30 mgKOH/g).

The grease compositions of Examples 1-28 and Comparative Examples 1-8 were subjected to the following tests.

(Seizure life test)

A 2.3 g portion of grease was enclosed in a contact rubber seal-attached deep-groove ball bearing having

an inner diameter of φ17 mm, an outer diameter of φ52 mm and a width of 16 mm, and the bearing was continuously rotated under conditions with an inner ring rotating speed of 20,000 $min^{-1}$, a bearing temperature of 170°C and a radial load of 98 N. The test was completed when seizure occurred and the bearing outer ring temperature reached 180°C. The test was carried out 4 times, and a passing level was judged if the average value of the time to test completion was 1000 hours or longer. The results are shown in Tables 1-6.

(Quick speed adjustment test)

An engine was used for quick speed adjustment of an alternator-incorporated bearing, to evaluate the flaking life. Specifically, a single row deep-groove ball bearing (inner diameter: φ17 mm, outer diameter: φ47 mm and a width: 14 mm) enclosing 2.36 g of grease composition was incorporated into an alternator, and the bearing was continuously rotated with a repeating engine rotation speed of 1000-6000 $min^{-1}$ (bearing rotation speed of 2400-13,300 $min^{-1}$), in a room temperature atmosphere under a 1570 N pulley load. Test completion was defined as a test time of 1000 hours, or the point at which flaking occurred on the bearing outer ring transfer surface causing vibration. The test was carried out 10 times, and the flaking was determined based on the following formula:

$$\text{Incidence of flaking} = (\text{number of tests in which flaking occurred}/\text{number of tests}) \times 100$$

The results are shown in Tables 1-6.

(Rust prevention test)

A 2.3 g portion of grease was enclosed in a contact rubber seal-attached deep-groove ball bearing having an inner diameter of φ17 mm, an outer diameter of φ47 mm and a width of 14 mm, and the bearing was rotated for 1 minute at 1800 $min^{-1}$. After stopping the rotation, 0.5 cc of 0.5 % by mass brine was poured into the bearing and rotation was continued for 1 minute at 1800 $min^{-1}$. After allowing it to stand at 52°C, 100% RH for 48 hours, the condition of rust on the inner and outer ring orbital planes of the test bearing was evaluated based on the following scale. The results are shown in Tables 1-6.

<Grade of rust>

1: No rust
2: Up to 3 small rust points
3: 4 or more small rust points

The correlation between $(W_1 + 0.5 \times W_2)/(W_1 + W_2 + W_3)$ and seizure life obtained in the test is shown in Fig. 2, the correlation between amount of zinc naphthenate addition and incidence of flaking/grade of rust is shown in Fig. 3, the correlation between amount of succinic acid ester addition and incidence of flaking/grade of rust is shown in Fig. 4, and the correlation between amount of ZnDTC addition and incidence of flaking/seizure life is shown in Fig. 5.

Table 1

| | | | Example 1 | Example 2 | Example 3 | Example 4 | Example 5 | Example 6 |
|---|---|---|---|---|---|---|---|---|
| Thickener | Diisocyanate [mol] | | 1 | 5 | 2 | 1 | 2 | 2 |
| | Monoamine [mol] | p-toluidine | 0 | 1 | 1 | 1 | 1 | 1 |
| | | cyclohexylamine | 2 | 9 | 3 | 1 | 3 | 3 |
| | $W_1+W_2+W_3$ [% by mass] | | 18 | 18 | 18 | 18 | 18 | 18 |
| | $\frac{(W_1+0.5\times W_2)}{(W_1+W_2+W_3)}$ | | 0 | 0.1 | 0.25 | 0.5 | 0.25 | 0.25 |
| Base oil | PAO [% by mass] | | 80.0 | 80.0 | 80.0 | 80.0 | 79.0 | 79.0 |
| | Ether [% by mass] | | - | - | - | - | - | - |
| | Ester [% by mass] | | - | - | - | - | - | - |
| Additives | Zinc naphthenate [% by mass] | | 1.0 | 1.0 | 1.0 | 1.0 | 1.0 | 1.0 |
| | Succinic acid ester [% by mass] | | 1.0 | 1.0 | 1.0 | 1.0 | 1.0 | 1.0 |
| | ZnDTC [% by mass] | | - | - | - | - | 1 | - |
| | ZnDTP [% by mass] | | - | - | - | - | - | 1 |
| | NiDTC [% by mass] | | - | - | - | - | - | - |
| | Barium sulfonate [% by mass] | | - | - | - | - | - | - |
| Seizure life [h] | | | 1400 | 1550 | 1600 | 1450 | 1900 | 1850 |
| Incidence of flaking [%] | | | 0 | 0 | 0 | 0 | 0 | 0 |
| Grade of rust | | | 2 | 2 | 2 | 2 | 2 | 2 |

Table 2

| | | | Example 7 | Example 8 | Example 9 | Example 10 | Example 11 | Example 12 |
|---|---|---|---|---|---|---|---|---|
| Thickener | Diisocyanate [mol] | | 2 | 2 | 2 | 2 | 2 | 2 |
| | Monoamine [mol] | p-toluidine | 1 | 1 | 1 | 1 | 1 | 1 |
| | | cyclohexylamine | 3 | 3 | 3 | 3 | 3 | 3 |
| | $W_1+W_2+W_3$ [% by mass] | | 18 | 18 | 18 | 18 | 18 | 18 |
| | $\frac{(W_1+0.5\times W_2)}{(W_1+W_2+W_3)}$ | | 0.25 | 0.25 | 0.25 | 0.25 | 0.25 | 0.25 |
| Base oil | PAO [% by mass] | | 79.0 | 72.0 | - | - | - | - |
| | Ether [% by mass] | | - | - | 80.0 | 79.0 | - | - |
| | Ester [% by mass] | | - | - | - | - | 80.0 | 79.0 |
| Additives | Zinc naphthenate [% by mass] | | 1 | 5 | 1 | 1 | 1 | 1 |
| | Succinic acid ester [% by mass] | | 1 | 5 | 1 | 1 | 1 | 1 |
| | ZnDTC [% by mass] | | - | - | - | 1 | - | 1 |
| | ZnDTP [% by mass] | | - | - | - | - | - | - |
| | NiDTC [% by mass] | | 1 | - | - | - | - | - |
| | Barium sulfonate [% by mass] | | - | - | - | - | - | - |
| Seizure life [h] | | | 1850 | 1300 | 1600 | 1850 | 1500 | 1750 |
| Incidence of flaking [%] | | | 0 | 0 | 0 | 0 | 0 | 0 |
| Grade of rust | | | 1 | 2 | 2 | 2 | 2 | 2 |

Table 3

| | | | Example 13 | Example 14 | Example 15 | Example 16 | Example 17 | Example 18 |
|---|---|---|---|---|---|---|---|---|
| Thickener | Diisocyanate [mol] | | 2 | 2 | 2 | 2 | 2 | 2 |
| | Monoamine [mol] | p-toluidine | 1 | 1 | 1 | 1 | 1 | 1 |
| | | cyclohexylamine | 3 | 3 | 3 | 3 | 3 | 3 |
| | $W_1+W_2+W_3$ [% by mass] | | 18 | 18 | 18 | 18 | 18 | 18 |
| | $\frac{(W_1+0.5\times W_2)}{(W_1+W_2+W_3)}$ | | 0.25 | 0.25 | 0.25 | 0.25 | 0.25 | 0.25 |
| Base oil | PAO [% by mass] | | 80.9 | 90.5 | 78.0 | 76.0 | 71.0 | 80.9 |
| | Ether [% by mass] | | - | - | - | - | - | - |
| | Ester [% by mass] | | - | - | - | - | - | - |
| Additives | Zinc naphthenate [% by mass] | | 0.1 | 0.5 | 3.0 | 5.0 | 10.0 | 1.0 |
| | Succinic acid ester [% by mass] | | 1.0 | 1.0 | 1.0 | 1.0 | 1.0 | 0.1 |
| | ZnDTC [% by mass] | | - | - | - | - | - | - |
| | ZnDTP [% by mass] | | - | - | - | - | - | - |
| | NiDTC [% by mass] | | - | - | - | - | - | - |
| | Barium sulfonate [% by mass] | | - | - | - | - | - | - |
| Seizure life [h] | | | 1800 | 1700 | 1500 | 1400 | 1100 | 1850 |
| Incidence of flaking [%] | | | 0 | 0 | 0 | 0 | 0 | 0 |
| Grade of rust | | | 2 | 2 | 2 | 2 | 2 | 1 |

Table 4

| | | | Example 19 | Example 20 | Example 21 | Example 22 | Example 23 | Example 24 |
|---|---|---|---|---|---|---|---|---|
| Thickener | Diisocyanate [mol] | | 2 | 2 | 2 | 2 | 2 | 2 |
| | Monoamine [mol] | p-toluidine | 1 | 1 | 1 | 1 | 1 | 1 |
| | | cyclohexylamine | 3 | 3 | 3 | 3 | 3 | 3 |
| | $W_1+W_2+W_3$ [% by mass] | | 18 | 18 | 18 | 18 | 18 | 18 |
| | $\frac{(W_1+0.5\times W_2)}{(W_1+W_2+W_3)}$ | | 0.25 | 0.25 | 0.25 | 0.25 | 0.25 | 0.25 |
| Base oil | PAO [% by mass] | | 80.5 | 78.0 | 76.0 | 71.0 | 79.9 | 79.5 |
| | Ether [% by mass] | | - | - | - | - | - | - |
| | Ester [% by mass] | | - | - | - | - | - | - |
| Additives | Zinc naphthenate [% by mass] | | 1.0 | 1.0 | 1.0 | 1.0 | 1.0 | 1.0 |
| | Succinic acid ester [% by mass] | | 0.5 | 3.0 | 5.0 | 10.0 | 1.0 | 1.0 |
| | ZnDTC [% by mass] | | - | - | - | - | 0.1 | 0.5 |
| | ZnDTP [% by mass] | | - | - | - | - | - | - |
| | NiDTC [% by mass] | | - | - | - | - | - | - |
| | Barium sulfonate [% by mass] | | - | - | - | - | - | - |
| Seizure life [h] | | | 1800 | 1600 | 1450 | 1150 | 1700 | 1800 |
| Incidence of flaking [%] | | | 0 | 0 | 0 | 0 | 0 | 0 |
| Grade of rust | | | 2 | 2 | 2 | 1 | 2 | 2 |

Table 5

| | | | Example 25 | Example 26 | Example 27 | Example 28 |
|---|---|---|---|---|---|---|
| Thickener | Diisocyanate [mol] | | 2 | 2 | 2 | 2 |
| | Monoamine [mol] | p-toluidine | 1 | 1 | 1 | 1 |
| | | cyclohexylamine | 3 | 3 | 3 | 3 |
| | $W_1+W_2+W_3$ [% by mass] | | 18 | 18 | 18 | 18 |
| | $\frac{(W_1+0.5\times W_2)}{(W_1+W_2+W_3)}$ | | 0.25 | 0.25 | 0.25 | 0.25 |
| Base oil | PAO [% by mass] | | 77.0 | 75.0 | 70.0 | 68.0 |
| | Ether [% by mass] | | - | - | - | - |
| | Ester [% by mass] | | - | - | - | - |
| Additives | Zinc naphthenate [% by mass] | | 1.0 | 1.0 | 1.0 | 1.0 |
| | Succinic acid ester [% by mass] | | 1.0 | 1.0 | 1.0 | 1.0 |
| | ZnDTC [% by mass] | | 3.0 | 5.0 | 10.0 | 12.0 |
| | ZnDTP [% by mass] | | - | - | - | - |
| | NiDTC [% by mass] | | - | - | - | - |
| | Barium sulfonate [% by mass] | | - | - | - | - |
| Seizure life [h] | | | 1950 | 1750 | 1650 | 1500 |
| Incidence of flaking [%] | | | 0 | 0 | 0 | 0 |
| Grade of rust | | | 2 | 2 | 2 | 2 |

Table 6

| | | | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 |
|---|---|---|---|---|---|---|---|---|---|---|
| Thickener | Diisocyanate [mol] | | 2 | 1 | 2 | 2 | 2 | 2 | 2 | 2 |
| | Monoamine [mol] | p-toluidine | 3 | 2 | 1 | 1 | 1 | 1 | 1 | 1 |
| | | cyclohexylamine | 1 | 0 | 3 | 3 | 3 | 3 | 3 | 3 |
| | $W_1+W_2+W_3$ [% by mass] | | 18 | 20 | 18 | 18 | 18 | 18 | 18 | 18 |
| | $\frac{(W_1+0.5\times W_2)}{(W_1+W_2+W_3)}$ | | 0.75 | 1 | 0.25 | 0.25 | 0.25 | 0.25 | 0.25 | 0.25 |
| Base oil | PAO [% by mass] | | 80.0 | 78.0 | 79.95 | 79.95 | 69.0 | 69.0 | 80.0 | 79.0 |
| | Ether [% by mass] | | - | - | - | - | - | - | - | - |
| | Ester [% by mass] | | - | - | - | - | - | - | - | - |
| Additives | Zinc naphthenate [% by mass] | | 1.0 | 1.0 | 0.05 | 1.0 | 12.0 | 1.0 | - | - |
| | Succinic acid ester [% by mass] | | 1.0 | 1.0 | 1.0 | 0.05 | 1.0 | 12.0 | - | - |
| | ZnDTC [% by mass] | | - | - | - | - | - | - | - | 1 |
| | ZnDTP [% by mass] | | - | - | - | - | - | - | - | - |
| | NiDTC [% by mass] | | - | - | - | - | - | - | - | - |
| | Barium sulfonate [% by mass] | | - | - | - | - | - | - | 2 | 2 |
| Seizure life [h] | | | 750 | 600 | 1600 | 1550 | 700 | 600 | 800 | 850 |
| Incidence of flaking [%] | | | 0 | 10 | 0 | 0 | 10 | 10 | 40 | 30 |
| Grade of rust | | | 2 | 2 | 3 | 3 | 1 | 1 | 2 | 2 |

## Industrial Applicability

As explained above, the present invention provides a grease composition with very excellent flaking life and excellent seizure life at high temperatures, as well as a rolling bearing which employs it. The invention therefore is highly useful for rolling bearings, particularly those used in alternators, electromagnetic clutches for automobile air conditioners, idler pulleys, motor driven fans, water pumps and other automotive electrical equipments and engine accessories.

## Claims

**1.** A grease composition comprising:

a lubricating base oil,
at least one diurea compound represented by one of the general formulas (1) to (3) below,
a naphthenic acid salt, and
succinic acid or a derivative thereof,

wherein each of the proportions of the diurea compounds represented by general formulas (1) to (3) satisfies the conditions represented by inequalities (4) and (5) below, and each of the proportions of said naphthenic acid salt and said succinic acid or its derivative is 0.1-10 % by mass based on the total amount of the grease composition.

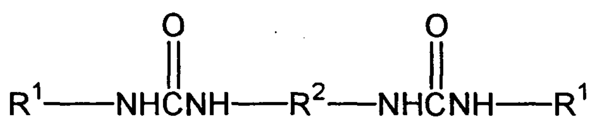
(1)

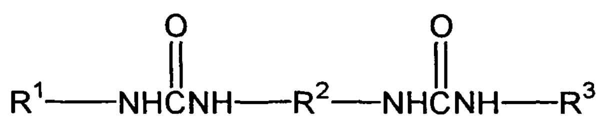
(2)

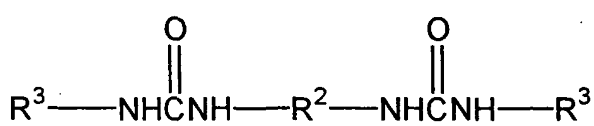
(3)

wherein $R^1$ represents a C7-12 aromatic ring-containing hydrocarbon group, $R^2$ represents a C6-15 divalent hydrocarbon group, and $R^3$ represents a cyclohexyl group or a C7-12 alkylcyclohexyl group

$$5 \leq W_1 + W_2 + W_3 \leq 35 \quad (4)$$

$$0 \leq (W_1 + 0.5 \times W_2)/(W_1 + W_2 + W_3) \leq 0.55 \quad (5)$$

wherein $W_1$, $W_2$ and $W_3$ represent the proportions of diurea compounds represented by general formulas (1) to (3), respectively, based on the total amount of the grease composition (% by mass).

**2.** A grease composition according to claim 1, which further comprises at least one type of organic metal salt represented by the following general formulas (6) to (11) at 0.1-10 % by mass based on the total amount of the grease composition.

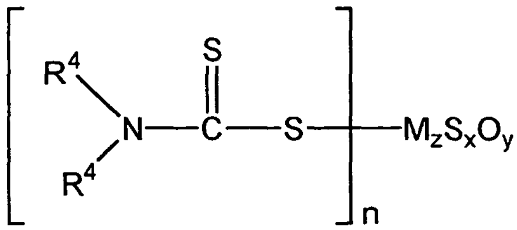

(6)

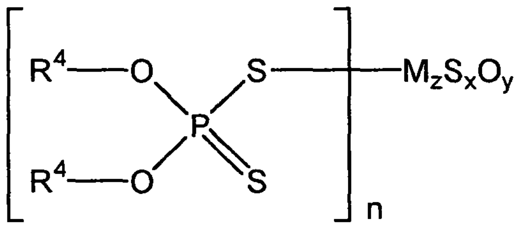

(7)

[wherein $R^4$ represents a C1-18 hydrocarbon group, M represents a metal atom, n represents an integer of 2-4, x and y each represent an integer of 0-4, and z represents an integer of 1-4].

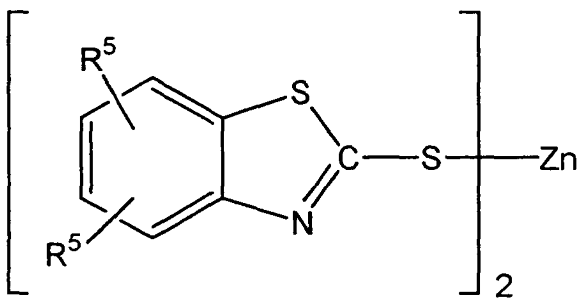

(8)

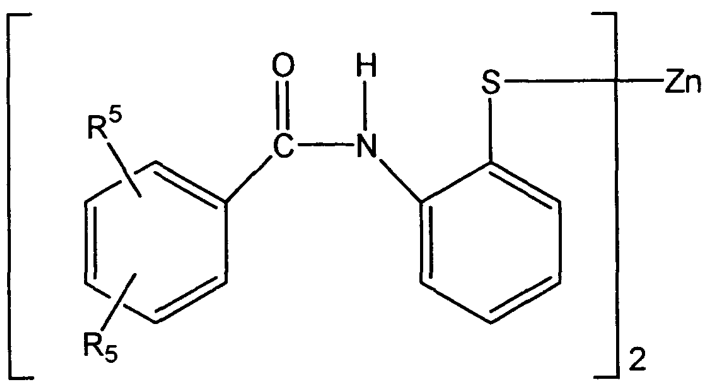

(9)

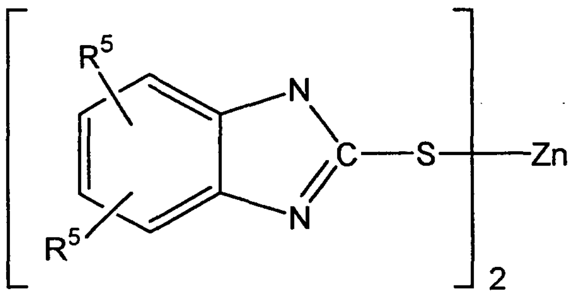

(10)

[wherein $R^5$ represents a hydrogen atom or a C1-18 hydrocarbon group].

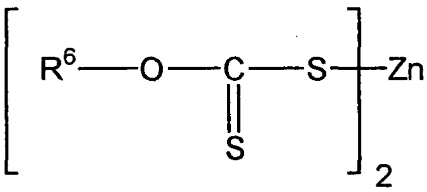

(11)

[wherein $R^6$ represents a C1-18 hydrocarbon group].

**3.** A grease composition according to claim 1, which contains no sulfonic acid salt.

**4.** A rolling bearing which holds a plurality of rolling elements in a freely rotatable manner at roughly equal spacings between an inner ring and an outer ring via a bearing cage, wherein a grease composition according to claim 1 is enclosed in the bearing space formed by said inner ring, said outer ring and said rolling elements.

Fig.1

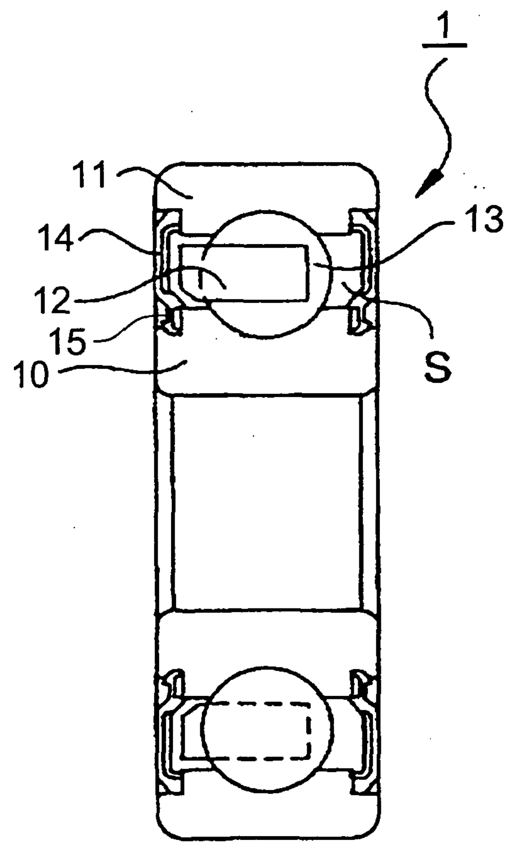

*Fig.2*

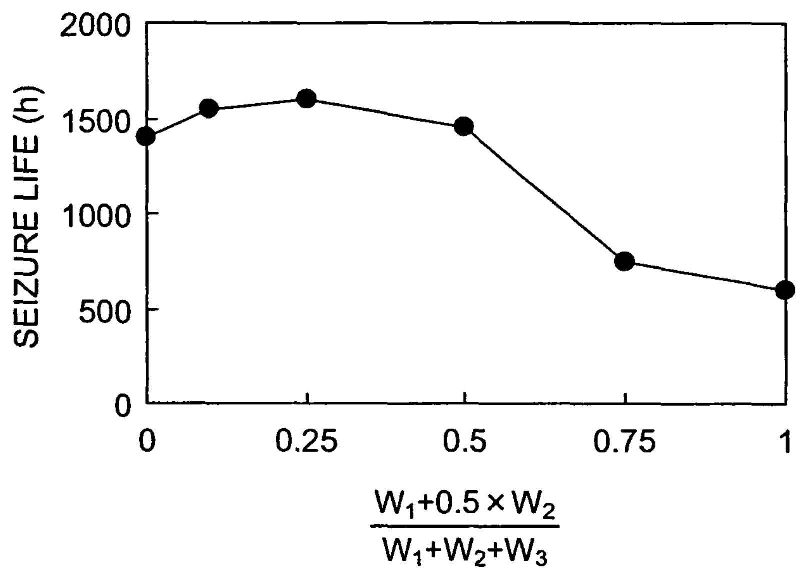
2000
1500
1000
500
0
SEIZURE LIFE (h)
0
0.25
0.5
0.75
1
$\frac{W_1+0.5\times W_2}{W_1+W_2+W_3}$

*Fig.3*

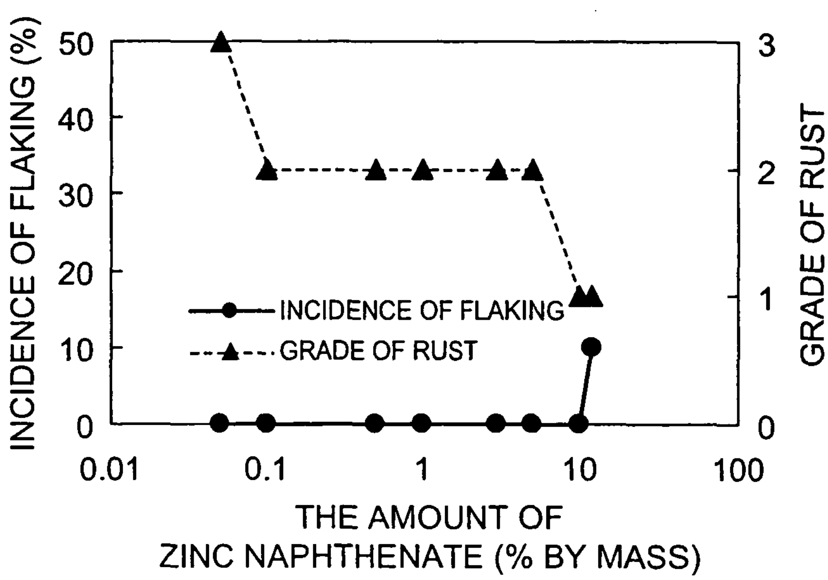
50
40
30
20
10
0
INCIDENCE OF FLAKING (%)
3
2
1
0
GRADE OF RUST
INCIDENCE OF FLAKING
GRADE OF RUST
0.01
0.1
1
10
100
THE AMOUNT OF
ZINC NAPHTHENATE (% BY MASS)

Fig.4

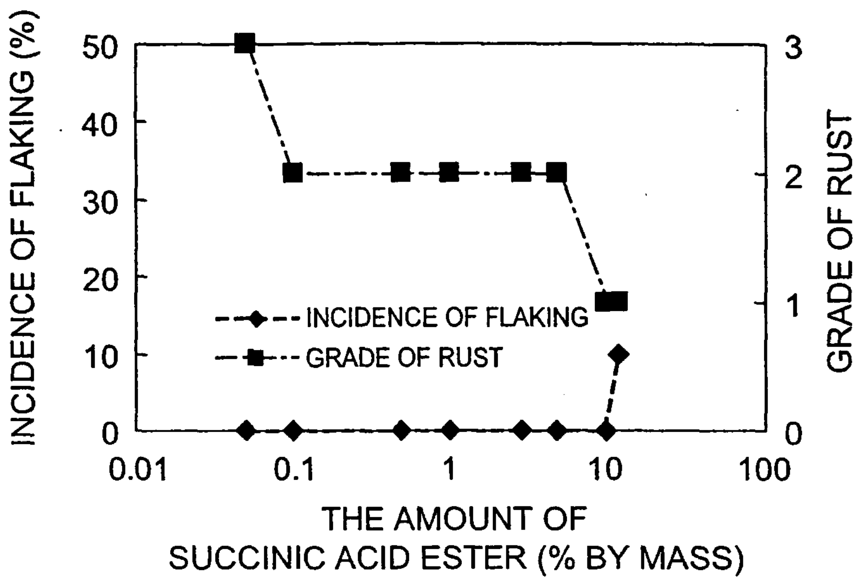
INCIDENCE OF FLAKING (%)
50
40
30
20
10
0
GRADE OF RUST
3
2
1
0
INCIDENCE OF FLAKING
GRADE OF RUST
0.01
0.1
1
10
100
THE AMOUNT OF
SUCCINIC ACID ESTER (% BY MASS)

Fig.5

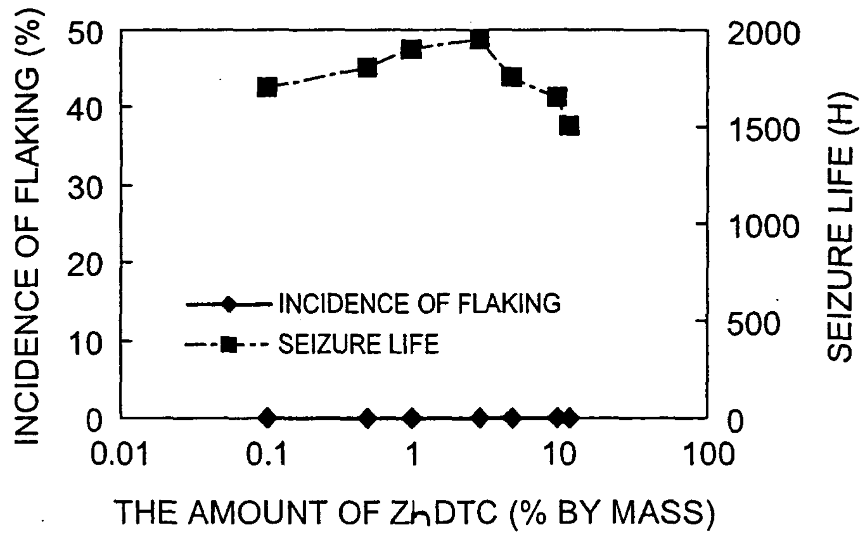
INCIDENCE OF FLAKING (%)
50
40
30
20
10
0
SEIZURE LIFE (H)
2000
1500
1000
500
0
INCIDENCE OF FLAKING
SEIZURE LIFE
0.01
0.1
1
10
100
THE AMOUNT OF ZnDTC (% BY MASS)

## INTERNATIONAL SEARCH REPORT

International application No.
PCT/JP03/06703

A. CLASSIFICATION OF SUBJECT MATTER
Int.Cl[7] C10M169/06, F16C33/66//(C10M169/06, 115:08, 129:34, 129:42, 129:58, 129:76, 133:16)(C10M169/06, 115:08, 129:34, 129:42, 129:58, 129:76, 133:16, 135:14, 135:18,
According to International Patent Classification (IPC) or to both national classification and IPC

B. FIELDS SEARCHED
Minimum documentation searched (classification system followed by classification symbols)
Int.Cl[7] C10M169/06, 115/08, 129/26-129/84, 133/16, 135/12-135/36, 137/10, C10N10:00-10:16, 30:06-30:08, 30:12, 40:02, 50:10, F16C33/66

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | US 2001/0034306 A1 (ISO, Kenichi et al.), 25 October, 2001 (25.10.01), & DE 10108343 A1 & JP 2001-234935 A & US 2002/0082175 A1 | 1-4 |
| Y | JP 10-121083 A (NTN Corp.), 12 May, 1998 (12.05.98), (Family: none) | 1-4 |
| Y | EP 869166 A1 (NIPPON OIL CO., LTD.), 07 October, 1998 (07.10.98), & JP 10-273690 A & US 6020290 A | 2 |
| Y | US 6352961 B1 (NSK LTD.), 05 March, 2002 (05.03.02), & JP 11-269478 A | 2 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>20 August, 2003 (20.08.03) | Date of mailing of the international search report<br>02 September, 2003 (02.09.03) |
| Name and mailing address of the ISA/<br>Japanese Patent Office | Authorized officer |
| Facsimile No. | Telephone No. |

Form PCT/ISA/210 (second sheet) (July 1998)

**INTERNATIONAL SEARCH REPORT**

International application No.
PCT/JP03/06703

C (Continuation). DOCUMENTS CONSIDERED TO BE RELEVANT

| Category* | Citation of document, with indication, where appropriate, of the relevant passages | Relevant to claim No. |
|---|---|---|
| Y | JP 10-204463 A (NSK Ltd.), 04 August, 1998 (04.08.98), (Family: none) | 2 |
| Y | JP 2000-26874 A (NSK Ltd.), 25 January, 2000 (25.01.00), (Family: none) | 2 |
| Y | JP 2000-303089 A (NSK Ltd.), 31 October, 2000 (31.10.00), (Family: none) | 2 |
| Y | JP 4-239597 A (Hitachi, Ltd.), 27 August, 1992 (27.08.92), (Family: none) | 2 |

Form PCT/ISA/210 (continuation of second sheet) (July 1998)

**INTERNATIONAL SEARCH REPORT**

International application No.
PCT/JP03/06703

Continuation of A. CLASSIFICATION OF SUBJECT MATTER
(International Patent Classification (IPC))

Int.Cl$^7$ 135:20, 135:28, 135:36, 137:10) C10N10:00, 30:06, 30:08, 30:12, 40:02, 50:10

(According to International Patent Classification (IPC) or to both national classification and IPC)

Form PCT/ISA/210 (extra sheet) (July 1998)